(19)

Europäisches
Patentamt
European
Patent Office
Office européen
des brevets

(11) **EP 4 546 199 A1**

(12) **EUROPEAN PATENT APPLICATION**
published in accordance with Art. 153(4) EPC

(43) Date of publication:
**30.04.2025 Bulletin 2025/18**

(21) Application number: **23826542.5**

(22) Date of filing: **21.06.2023**

(51) International Patent Classification (IPC):
**G06F 30/15** (2020.01)    **H01M 10/613** (2014.01)

(52) Cooperative Patent Classification (CPC):
**G06F 18/214; G06F 30/15; G06F 30/27;**
**H01M 10/613;** G06F 2113/08; G06F 2119/08

(86) International application number:
**PCT/CN2023/101829**

(87) International publication number:
**WO 2023/246897 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.06.2022 CN 202210715733**

(71) Applicant: **Beijing Co Wheels Technology Co., Ltd Beijing 101300 (CN)**

(72) Inventors:
• **ZHANG, Hongyang**
  **Beijing 101300 (CN)**
• **XUE, Jian**
  **Beijing 101300 (CN)**
• **MENG, Ying**
  **Beijing 101300 (CN)**
• **MA, Chunshan**
  **Beijing 101300 (CN)**
• **LIU, Kaifeng**
  **Beijing 101300 (CN)**
• **MENG, Yue**
  **Beijing 101300 (CN)**
• **NING, Yunpeng**
  **Beijing 101300 (CN)**

(74) Representative: **advotec.**
  **Patent- und Rechtsanwaltspartnerschaft**
  **Tappe mbB**
  **Widenmayerstraße 4**
  **80538 München (DE)**

(54) **THERMAL MANAGEMENT SYSTEM MODELING METHOD AND APPARATUS, AND DEVICE, MEDIUM AND VEHICLE**

(57) Provided are a thermal management system modeling method and apparatus, and a device, a readable storage medium, a vehicle, a computer program product and a computer program. The method comprises: acquiring a plurality of temperature nodes in a thermal management system and a plurality of branch loops in the thermal management system; on the basis of a heat exchange component in each branch loop and/or warm water points of cooling liquids in at least two branch loops, determining temperature nodes which cannot be combined; and on the basis of the temperature nodes which cannot be combined, combining the temperature nodes in the thermal management system according to a preset combination strategy, so as to obtain a target model corresponding to the thermal management system.

EP 4 546 199 A1

obtaining a plurality of temperature nodes in the thermal management system of a vehicle and a plurality of branch loops in the thermal management system — Step 310

determining temperature nodes that are unable to be combined in the thermal management system based on a heat exchange component in each of the plurality of branch loops and/or warm water points of coolant in at least two of the plurality of branch loops — Step 320

obtaining a target model corresponding to the thermal management system by combining the plurality of temperature nodes in the thermal management system according to a preset combination policy based on the temperature nodes that are unable be combined in the thermal management system — Step 330

FIG. 3

**Description**

**CROSS REFERENCE TO RELATED APPLICATIONS**

This application claims priority to Chinese patent application No. 202210715733.8, filed on June 23, 2022, the entire contents of which are incorporated herein by reference.

**TECHNICAL FIELD**

The disclosure belongs to a field of thermal management technology, more particularly, to a method for modeling a thermal management system, an apparatus for modeling a thermal management system, a device for modeling a thermal management system, a readable storage medium, a vehicle, a computer program product and a computer program.

**BACKGROUND**

An automotive thermal management system may automatically adjust a coolant strength according to driving conditions and environmental conditions to keep a corresponding component working within an optimal temperature range, specifically to keep an engine working within a corresponding optimal temperature range.

Since the coolant circulates throughout the entire thermal management system, an outlet temperature of the coolant is calculated based on a structure of the thermal management system. The thermal management system has a complex structure and multiple circulation nodes, resulting in a large workload and a slow speed for calculating the outlet temperature of the coolant.

**SUMMARY**

A purpose of embodiments of the disclosure is to provide a method for modeling a thermal management system, an apparatus for modeling a thermal management system, a device for modeling a thermal management system, a readable storage medium, a vehicle, a computer program product and a computer program, to simplify the thermal management system thus, enabling to simply and quickly calculate an outlet temperature of coolant.

The technical solutions of the disclosure are provided as follows.

According to a first aspect of embodiments of the disclosure, a method for modeling a thermal management system is provided. The method includes:

obtaining a plurality of temperature nodes in the thermal management system of a vehicle and a plurality of branch loops in the thermal management system;

determining temperature nodes that are unable to be combined in the thermal management system based on a heat exchange component in each of the plurality of branch loops and/or warm water points of coolant in at least two of the plurality of branch loops; and

obtaining a target model corresponding to the thermal management system by combining the plurality of temperature nodes in the thermal management system according to a preset combination policy based on the temperature nodes that are unable to be combined in the thermal management system.

According to a second aspect of embodiments of the disclosure, an apparatus for modeling a thermal management system is provided. The apparatus includes:

a first obtaining module, configured to obtain a plurality of temperature nodes in the thermal management system of a vehicle and a plurality of branch loops in the thermal management system;

a first determining module, configured to determine temperature nodes that are unable to be combined in the thermal management system based on a heat exchange component in each of the plurality of branch loops and/or warm water points of coolant in at least two of the plurality of branch loops; and

a second determining module, configured to obtain a target model corresponding to the thermal management system by combining the plurality of temperature nodes in the thermal management system according to a preset combination policy based on the temperature nodes that are unable to be combined in the thermal management system.

According to a third aspect of embodiments of the disclosure, a device for modeling a thermal management system is provided. The device includes: a processor, a memory and programs or instructions stored on the memory and executable by the processor. When the programs or instructions are executed by the processor, the steps of the method for modeling a thermal management system of any embodiment of the first aspect of the disclosure are implemented.

According to a fourth aspect of embodiments of the disclosure, a computer-readable storage medium having programs or instructions stored thereon is provided. When the programs or instructions are executed by a processor, the steps of the method for modeling a thermal management system of any embodiment of the first aspect of the disclosure are implemented.

According to a fifth aspect of embodiments of the disclosure, a vehicle is provided. The vehicle includes at least one of:

the apparatus for modeling a thermal management system described in the embodiment of the first aspect;

the device for modeling a thermal management system described in the embodiment of the second aspect; and

the computer readable storage medium described in the embodiment of the third aspect.

According to a sixth aspect of embodiments of the disclosure, a computer program product including a computer program is provided. When the computer program is executed by a processor, the method for modeling a thermal management system of any embodiment of the first aspect of the disclosure is implemented.

According to a seventh aspect of embodiments of the disclosure, a computer program including computer program codes is provided. When the computer program codes are executed by a computer, the computer is caused to implement the method for modeling a thermal management system of any embodiment of the first aspect of the disclosure.

The technical solutions provided by the embodiments of the disclosure bring at least the following beneficial effects.

With the method for modeling a thermal management system, the apparatus for modeling a thermal management system, the device for modeling a thermal management system, the medium and a vehicle provided by the embodiments of the disclosure, the plurality of temperature nodes in the thermal management system and the plurality of branch loops in the thermal management system are obtained, and the temperature nodes that satisfy a preset condition but are unable to be combined in the thermal management system are determined based on the heat exchange component in each of the plurality of branch loops and/or the warm water points of the coolant in at least two of the plurality of branch loops. The target model corresponding to the thermal management system is obtained by combining the plurality of temperature nodes in the thermal management system according to the preset combination policy based on the temperature nodes that are unable to be combined. Since the temperature nodes in the thermal management system can be combined continuously according to the preset combination policy, the number of temperature nodes in the finally obtained target model is less than the number of temperature nodes in the thermal management system at the beginning, which simplifies a structure of the thermal management system. In this way, when calculating an outlet water temperature in the thermal management system, there is no need to calculate the temperatures of too many temperature nodes, thereby improving a calculation efficiency of the outlet water temperature and saving computing power.

It should be understood that the above general description and the following detailed description are exemplary and explanatory only and do not limit the disclosure.

## BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure and do not constitute undue limitations on the disclosure.

FIG. 1 is a schematic diagram of an overall model of a thermal management system involved in an embodiment of a first aspect of the disclosure.

FIG. 2 is a schematic diagram of an overall model of a thermal management system involved in an embodiment of the first aspect of the disclosure.

FIG. 3 is a flowchart of a method for modeling a thermal management system provided by an embodiment of the first aspect of the disclosure.

FIG. 4 is a schematic diagram of a first model involved in an embodiment of the first aspect of the disclosure.

FIG. 5 is a schematic diagram of a second model involved in an embodiment of the first aspect of the disclosure.

FIG. 6 is a schematic diagram of a target model involved in an embodiment of the first aspect of the disclosure.

FIG. 7 is a schematic diagram of a double-layer flat plate model of an engine involved in an embodiment of the first aspect of the disclosure.

FIG. 8 is a schematic diagram of a temperature delay model of flow accumulation involved in an embodiment of the first aspect of the disclosure.

FIG. 9 is a schematic diagram of an apparatus for modeling a thermal management system provided by an embodiment of a second aspect of the disclosure.

FIG. 10 is a schematic diagram of a device for modeling a thermal management system provided by an embodiment of a third aspect of the disclosure.

## DETAILED DESCRIPTION

In order to more clearly understand the above-mentioned objects, features and advantages of the disclosure, the solutions of the disclosure are further described below. It should be noted that, without conflict, the embodiments of the disclosure and features therein may be combined with each other.

Many specific details are set forth in the following description in order to fully understand the disclosure, but the disclosure may also be implemented in other ways than those described herein. Obviously, the embodiments in the specification are only a part of embodiments and not all embodiments of the disclosure.

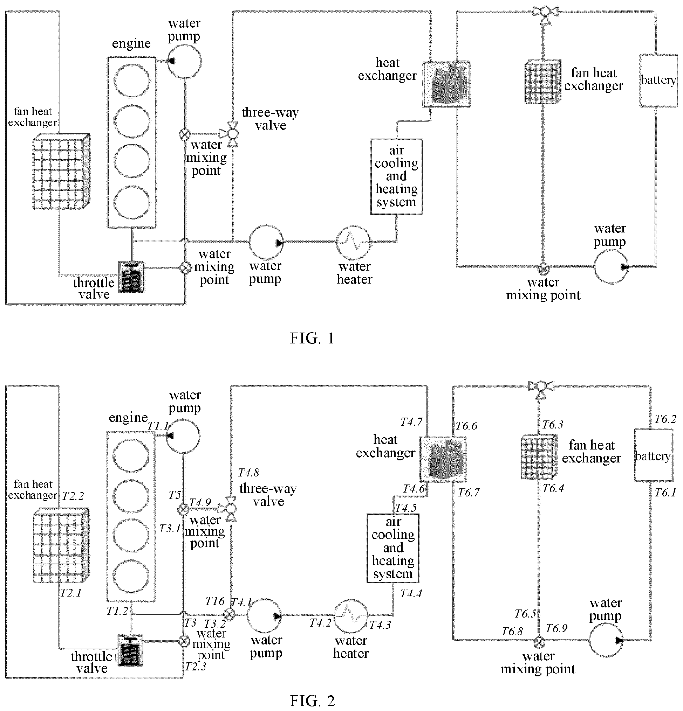

In the related art, FIG. 1 is an overall model of a thermal management system of a vehicle. The connecting lines between heat exchange components in FIG. 1 (such as a battery, a fan heat exchanger, and an engine in FIG. 1) may indicate a flow direction of coolant. There are many circulation nodes between an inlet and an outlet of the coolant. The calculation of an outlet temperature of the coolant is based on a structure of the thermal management system. However, the structure of the thermal management system is complex and contains multiple circulation nodes, e.g., circulation nodes at both ends of the battery (T6.2 and T6.1), circulation nodes at both ends of the fan heat exchanger (T6.3 and T6.4), and circulation nodes at both ends of the engine (T1.1 and T1.2) in FIG. 2. In this way, when calculating the outlet temperature of the coolant, according to an inlet temperature of the coolant, the temperature of each circulation node is calculated first according to a flow direction of the coolant, and then the outlet temperature is calculated. For example, as shown in FIG. 2, the temperatures at both ends of the engine are calculated at first. Then, according to the flow direction of the coolant, the temperature at the temperature node T3 is calculated, the temperature at the temperature node T2.1 and the temperature at the temperature node T2.3 are calculated, and the temperature at the temperature node T2.2 is calculated according to the temperature at the temperature node T2.1. By that analogy, the outlet temperature of the coolant is calculated. In this way, the calculation amount is large and the calculation speed is slow.

In order to solve the above problems, embodiments of the disclosure provide a method for modeling a thermal management system, an apparatus for modeling a thermal management system, a device for modeling a thermal management system, a readable storage medium, a vehicle, a computer program product and a computer program. By obtaining a plurality of temperature nodes in a thermal management system and a plurality of branch loops in the thermal management system, temperature nodes that satisfy a preset condition but are unable to be combined in the thermal management system are determined based on heat exchange components in each of the branch loops and/or warm water points of coolant in at least two of the branch loops. A target model corresponding to the thermal management system is obtained by combining the temperature nodes in the thermal management system according to a preset combination policy based on the temperature nodes that are unable to be combined. Since the temperature nodes in the thermal management system can be combined continuously according to the preset combination policy, a number of temperature nodes in the target model finally obtained is less than a number of temperature nodes in the thermal management system at the beginning, which simplifies the structure of the thermal management system. **In** this way, when calculating an outlet water temperature in the thermal management system, there is no need to calculate the temperatures of too many temperature nodes, thereby improving the calculation efficiency of the outlet water temperature and saving computing power.

The method for modeling a thermal management system provided by embodiments of the disclosure is described in detail below with reference to the accompanying drawings through specific embodiments and their application scenarios.

It should be noted that the method for modeling a thermal management system provided in the embodiments of the disclosure is based on detecting an outlet temperature of the coolant at the engine and the outlet temperature of the coolant at the battery in FIG. 1.

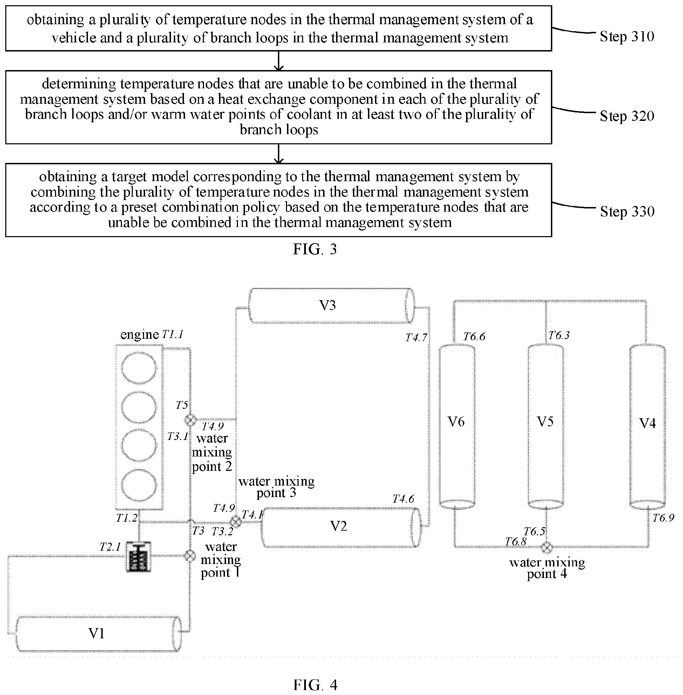

FIG. 3 is a flowchart of a method for modeling a thermal management system provided by an embodiment of the disclosure. An execution subject of the method for modeling a thermal management system may be a server. It should be noted that the above execution subject does not constitute a limitation of the disclosure.

As shown in FIG. 3, the method for modeling a thermal management system provided by the embodiment of the disclosure may include steps 310-330.

At step 310, a plurality of temperature nodes in the thermal management system of a vehicle and a plurality of branch loops in the thermal management system are obtained.

At step 320, temperature nodes that are unable to be combined in the thermal management system are determined based on a heat exchange component in each of the plurality of branch loops and/or warm water points of coolant in at least two of the plurality of branch loops.

At step 330, a target model corresponding to the thermal management system is obtained by combining the plurality of temperature nodes in the thermal management system according to a preset combination policy based on the temperature nodes that are unable to be combined in the thermal management system.

In the embodiments of the disclosure, the plurality of temperature nodes in the thermal management system and the plurality of branch loops in the thermal management system are obtained, and the temperature nodes that satisfy a preset condition but are unable to be combined in the thermal management system are determined based on the heat exchange component in each of the branch loops and/or the warm water points of the coolant in at least two of the plurality of branch loops. The target model corresponding to the thermal management system is obtained by combining the plurality of temperature nodes in the thermal management system according to the preset combination policy based on the temperature nodes that are unable to be combined. Since the temperature nodes in the thermal management system can be combined continuously according to the preset combination policy, the number of temperature nodes in the finally obtained target model is less than the number of temperature nodes in the thermal management system at the beginning, which simplifies a structure of the thermal management system. In this way, when calculating an outlet water temperature in the thermal management system, there is no need to calculate the temperatures of too many temperature nodes, thereby improving a calculation efficiency of the outlet water temperature and saving computing power.

The method for modeling a thermal management system provided by embodiments of the disclosure is described in detail below.

At step 310, a plurality of temperature nodes in the thermal management system of a vehicle and a plurality of branch loops in the thermal management system are obtained.

The temperature nodes may be nodes calculated in the thermal management system when calculating an outlet temperature of coolant, e.g., the circulation nodes at both ends of the battery, the circulation nodes at both ends of the fan heat exchanger, and the circulation nodes at both ends of the engine in FIG. 1.

The branch loop may be a circulation loop formed by the circulation of the coolant in the thermal management system. For example, many loops can be formed in FIG. 1, such as, a loop of battery-fan heat exchanger- battery, a loop of battery- heat exchanger-battery, and a loop of heat exchanger-air cooling and heating system-three-way valve-heat exchanger.

At step 320, temperature nodes that are unable to be combined in the thermal management system are determined based on a heat exchange component in each of the plurality of branch loops and/or warm water points of coolant in at least two of the plurality of branch loops.

In some embodiments of the disclosure, the temperature nodes that are unable to be combined in the thermal management system can be determined according to the heat exchange component in each branch loop. In detail, if a certain branch loop has a heat exchange component, it can be determined that the temperature nodes at both ends of the heat exchange component in the branch loop are unable to be combined.

In an example, as shown in FIG. 2, for the branch loop of battery-fan heat exchanger-battery, there is a heat exchange component, i.e., the battery, between a temperature node T6.1 and a temperature node T6.2, thus the temperature node T6.1 and the temperature node T6.2 are unable to be combined. Correspondingly, there is a heat exchange component, i.e., the fan heat exchanger, between a temperature node T6.3 and a temperature node T6.4, thus the temperature node T6.3 and the temperature node T6.4 are unable to be combined.

In some embodiments of the disclosure, the temperature nodes that are unable to be combined in the thermal management system can be determined according to the warm water points of the coolant in at least two branch loops. In detail, if the coolant in the at least two branch loops are mixed together, it is determined that the temperature nodes of the at least two branch loops are unable to be combined.

In an example, as shown in FIG. 2, a water mixing point between a water pump and the fan heat exchanger in FIG. 2 is a water mixing point of both the branch loop of battery-fan heat exchanger-battery and a branch loop of fan heat exchanger-heat exchanger-fan heat exchanger, and thus a temperature node T6.5 and a temperature node T6.8 are unable to be combined.

At step 330, a target model corresponding to the thermal management system is obtained by combining the plurality of temperature nodes in the thermal management system according to a preset combination policy based on the temperature nodes that are unable to be combined in the thermal management system.

The preset combination policy may be a preset policy for combining temperature nodes that are unable to be combined in the thermal management system.

In some embodiments of the disclosure, in order to further improve the efficiency of calculating the outlet temperature of the coolant, the step 330 may include steps 3301-3304.

At step 3301, a delay volume corresponding to the heat exchange component in each branch loop is established based on the temperature nodes that are unable to be combined in the thermal management system.

In some embodiments of the disclosure, the delay volume corresponding to the heat exchange component in each branch loop may be established according to the temperature nodes that are unable to be combined in the thermal management system.

In some embodiments, in order to accurately establish the delay volume corresponding to the heat exchange component in each branch loop, step 3301 may include:

determining N initial volumes one-to-one corresponding to the plurality of branch loops in the thermal management system according to an open-loop model; and

closing the open-loop model, and obtaining N delay volumes one-to-one corresponding to the plurality of branch loops in the thermal management system by modifying the N initial volumes through the closed open-loop model.

An input of the open-loop model is a control parameter value of the thermal management system at a $k^{th}$ moment. The control parameter value may be a value of a control parameter for controlling operation of the thermal management system, and a specific control parameter value is described in detail in the following embodiments. An output of the open-loop model is a temperature of the thermal management system at the $k^{th}$ moment.

In a specific implementation, the N initial volumes one-to-one corresponding to the plurality of branch loops can be determined by comparing a temperature at a certain moment predicted by the open-loop model with an actual temperature at the certain moment.

The open-loop model can be converted into a closed-loop model, which is a model for predicting a temperature at a future moment. The closed-loop model is used to modify an initial volume corresponding to each branch loop to obtain a delay volume corresponding to each branch loop. A specific modification method may be comparing a temperature of a certain branch loop predicted by the closed-loop model with an actual temperature of the certain branch loop, and modifying the initial volume based on a comparison result.

By means of the above method, the reliability of determining the delay volume corresponding to each branch loop can be improved.

In some embodiments of the disclosure, a purpose of the delay volume is to simulate a delay between two temperature nodes.

In embodiments of the disclosure, the N initial volumes one-to-one corresponding to the plurality of branch loops in the thermal management system are determined according to the open-loop model. The open-loop model is closed, and the N delay volumes corresponding to the plurality of branch loops in the thermal management system are obtained by modifying the N initial volumes with the closed open-loop model. In this way, the N delay volumes one-to-one corresponding to the plurality of branch loops can be obtained accurately, thereby improving the reliability of determining the delay volume corresponding to each branch loop.

At step 3302, a first model corresponding to the thermal management system is obtained by simplifying the heat exchange component in each branch loop of the thermal management system based on the delay volume corresponding to the heat exchange component in each branch loop.

The first model may be a simplified model of the thermal management system obtained by simplifying the heat exchange component in each branch loop of the thermal management system based on the delay volume corresponding to the heat exchange component in each branch loop.

In an example, one or more heat exchange components in each branch loop of the thermal management system can be simplified according to the one or more delay volumes corresponding to the one or more heat exchange components in each branch loop established as described above, so as to obtain the first model corresponding to the thermal management system shown in FIG. 4. It should be noted that, in FIG. 2, the air cooling and heating system is not working, thus the air cooling and heating system and the heat exchanger can be combined together to obtain the virtual volume V5 in FIG. 4.

In FIG. 4, the virtual volume V1 is from T2.1 to T2.3, which passes through T2.2 and includes a fan heat exchanger. The virtual volume V2 is from T4.1 to T4.6, which passes through T4.2-T4.5 and includes a cooling and heating system. The virtual volume V3 is from T4.6 to T4.9/T4.10, which passes through T4.7 and T4.8 and includes a heat exchanger and a three-way valve. The virtual volume V4 is from T4.9 to T6.3/T6.6, which passes through T6.1 and T6.2 and includes a battery. The virtual volume V5 is from T6.3 to T6.5, which passes through T6.4 and includes a battery and a fan heat exchanger. The virtual volume V6 is from T6.6 to T6.8, which passes through T6.7 and includes a heat exchanger.

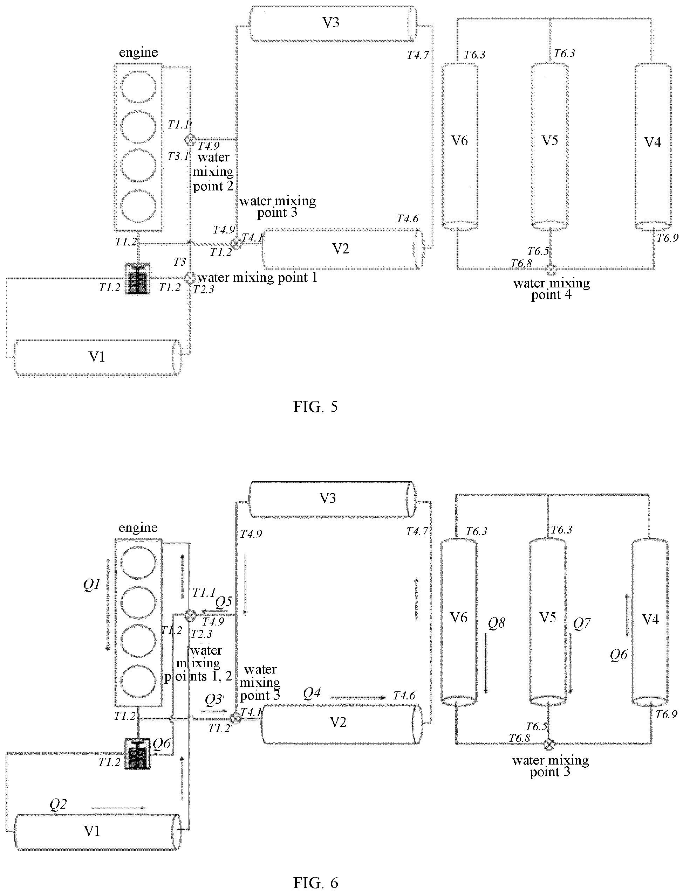

The virtual volumes V1-V6 in FIG. 5 and FIG. 6 below are consistent with those in FIG. 4 and will not be described in detail below.

At step 3303, a second model corresponding to the thermal management system is obtained by combining temperature nodes having a same temperature in different branch loops in the first model.

The second model may be a simplified model of the thermal management system obtained by combining the temperature nodes having the same temperature in different branch loops in the first model.

In an example, with reference to FIG. 4, the temperature nodes T1.2, T2.1 and T3.2 belong to different branch loops, and their temperatures are the same without heat conduction. Therefore, the temperature nodes T1.2, T2.1 and T3.2 in FIG. 5 can be combined. Moreover, the temperature nodes T6.6 and T6.3 in FIG. 4 belong to different branch loops, and their temperatures are the same without heat conduction. Therefore, the temperature nodes T6.6 and T6.3 in FIG. 4 can be combined. The temperature nodes T1.1 and T5 in FIG. 4 belong to different branch loops, and their temperatures are the same without heat conduction. Therefore, the temperature nodes T6.6 and T6.3 in FIG. 4 can be combined. In this way, the second model shown in FIG. 5 can be obtained.

At step 3304, the target model corresponding to the thermal management system is obtained by combining two adjacent water mixing points without heat conduction in the second model into one water mixing point.

The target model may be a simplified model of the thermal management system obtained by combining two adjacent water mixing points without heat conduction in the second model into one water mixing point.

In an example, as shown in FIG. 5, a water mixing point 1 and a water mixing point 2 are two adjacent water mixing points, there is no heat conduction between them, and neither an outlet temperature node of the engine or an outlet temperature node of the battery to be calculated is located between the water mixing point 1 and the water mixing point 2, therefore, the water mixing point 1 and the water mixing point 2 can be combined into one water mixing point, and the target model shown in FIG. 6 is obtained.

After the above simplification, there are a total of 6 virtual volumes in the thermal management system, and the temperature nodes to be processed in the thermal management system are reduced from 28 to 13, which simplifies the calculation, improves the calculation efficiency, and saves computing power.

In some embodiments of the disclosure, in order to accurately calculate the outlet temperature, after step 3304, the method for modeling a thermal management system may further include:

establishing a local flow model of a first target branch loop based on a flow relation between branch loops in the target model;

calculating a flow corresponding to the first target branch loop based on the local flow model of the first target branch loop; and

determining a temperature of the first target branch loop based on the flow corresponding to the first target branch loop and a temperature delay model corresponding to a delay volume of the first target branch loop.

The first target branch loop may be at least one of the branch loops.

In embodiments of the disclosure, the local flow model of the first target branch loop can be established based on the flow relation between the branch loops in the first target model. The flow corresponding to the first target branch loop can be calculated based on the local flow model. The temperature of the first target branch loop can be accurately determined according to the flow corresponding to the first target branch loop and the temperature delay model corresponding to the delay volume of the first target branch loop.

In some embodiments of the disclosure, establishing the local flow model of the first target branch loop based on the flow relation between the branch loops in the target model includes:

determining the first target branch loop based on a number of the branch loops in the target model and a flow equation between the branch loops in the first target model; and

establishing a local flow model corresponding to a type of a heat exchange component in the first target branch loop based on the type of the heat exchange component in the first target branch loop.

In some embodiments of the disclosure, there are 8 branch loops (i.e., Q1-Q8 in FIG. 6) in the target model shown in FIG. 6. According to a flow relation between the respective branch loops in FIG. 6 (an inflow flow of the same temperature nodes or the same closed-loop branch loops is equal to an outflow flow), flow equations between the branch loops shown in the following equation (1)-equation (2) can be obtained as follows:

$$Q1 = Q2 + Q3 + Q6 \qquad (1)$$
$$Q3 = Q5$$
$$Q6 = Q7 + Q8$$

Since the flow of Q6 and the flow of Q2 depend on an opening degree of a throttle valve, there is a relation shown in the following equation (2):

$$Q2 = f\left(\text{an opening degree of a throttle valve}, Q1 - Q3\right) \qquad (2)$$

In this way, there are 8 flows and 4 equations in the target model. Therefore, when establishing the local flow model, the local flow models of only 4 branch loops may be established. For example, the local flow models of the branch loops Q1, Q2, Q6 and Q7 may be established.

In some embodiments of the disclosure, different types of heat exchange components have different methods for establishing a local flow model. Therefore, when establishing a local flow model of the first target branch loop, a local flow model corresponding to a type of a heat exchange component in the first target branch loop may be established according to the type of the heat exchange component in the first target branch loop.

In embodiments of the disclosure, the first target branch loop can be determined based on the number of branch loops in the first target model and the flow equation between the branch loops in the first target model. Based on the type of the heat exchange component in the first target branch loop, the local flow model corresponding to the type of the heat exchange component in the first target branch loop is established, so that the local flow model corresponding to the first target branch loop can be accurately established, and an accurate outlet temperature of the first target branch loop is obtained.

In some embodiments of the disclosure, when the type of the heat exchange component in the first target branch loop is an engine type, establishing the local flow model corresponding to the type of the heat exchange component in the first target branch loop includes:

> obtaining a first correspondence equation of a heat exchange coefficient between an operating condition parameter of an engine and combustion gas by fitting a historical operating condition parameter of the engine and a heat exchange coefficient between the historical operating condition parameter and the combustion gas;
> obtaining a second correspondence equation of a heat exchange coefficient between a mass flow of the coolant and a cylinder wall of the engine by fitting a mass flow of coolant in the target branch loop, and a heat exchange coefficient between the mass flow of the coolant and the cylinder wall of the engine; and
> obtaining a function between a temperature of the combustion gas and the operating condition parameter of the engine by fitting, based on a double-layer flat plate model corresponding to the engine, the first correspondence equation and the second correspondence equation according to a steady-state heat exchange conservation equation between the coolant in the engine and the combustion gas.

The historical operating condition parameter may be an operating condition parameter of the engine before predicting a temperature of a cooling system of the engine at this time.

The first correspondence equation may be an equation of the heat exchange coefficient between the operating condition parameter of the engine and the combustion gas.

The second correspondence equation may be an equation of the heat exchange coefficient between the mass flow of the coolant and the cylinder wall of the engine.

The functional relation between the temperature of the combustion gas and the operating condition parameter of the engine may be a local flow model established corresponding to the type of the heat exchange component in the target branch loop.

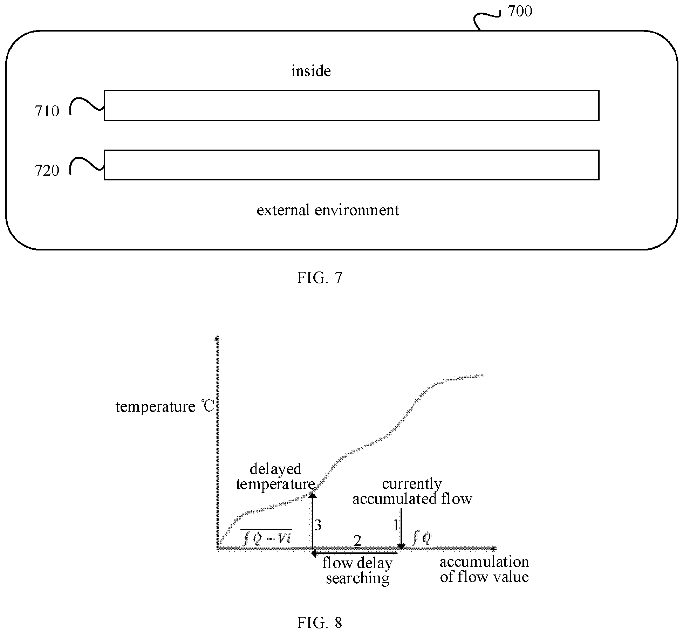

In some embodiments of the disclosure, a heat exchange model of the engine may be simplified. For example, the heat exchange model of the engine may be simplified to a double-layer flat plate heat exchange model (as shown in FIG. 7). In FIG. 7, the combustion gas (not shown) is inside the engine 700, and the coolant (not shown) is between an inner cylinder wall 710 and an outer cylinder wall 720. After the combustion gas is burned, heat flows into the inner cylinder wall 710 through convective heat exchange and heats the inner cylinder wall 710. The inner cylinder wall 710 in turn heats the coolant. The temperature of the coolant raises after obtaining energy, and heats the outer cylinder wall 720. Meanwhile, spontaneous convective heat exchange occurs between the outer cylinder wall and the external environment.

In subsequent embodiments of the disclosure, for example, a cover of the cylinder is in one piece with the inner cylinder wall, and there is no heat conduction between the cover and the outer cylinder wall. The cylinder wall can be heated uniformly without considering the internal temperature difference.

In some embodiments of the disclosure, the historical operating condition parameter of the engine and the heat exchange coefficient between the historical operating condition parameter and the combustion gas can be fitted to obtain the first correspondence equation of the heat exchange coefficient between the operating condition parameter of the engine and the combustion gas, which is shown in equation (3):

$$\alpha 1 = (a1 * n^2 - b1 * T^2 - c1 * n * T + d1 * n + f1 * T + h1) \qquad (3)$$

where, in equation (3), $\alpha 1$ is the heat exchange coefficient between the operating condition parameter of the engine and the combustion gas, n is a rotation speed of the engine, T is a torque of the engine, and a1, b1, c1, d1, f1 and h1 are all constants that are determined based on the type of the engine.

In some embodiments of the disclosure, the constants in the above equation (3) may be: a1=-6.048e-07, b1=0.00028, c1=0.000143, d1=0.0497, f1=0.00868, h1=35.6212.

In some embodiments of the disclosure, the mass flow of the coolant and the heat exchange coefficient between the mass flow of the coolant and the cylinder wall of the engine can be fitted to obtain the second correspondence equation of the heat exchange coefficient between the mass flow of the coolant and the cylinder wall of the engine, which is as shown

in equation (4):

$$\alpha 2 = (a2 * \dot{m}^2 + b2 * \dot{m} + c2) \qquad (4)$$

where, in equation (4), $\alpha 2$ is the heat exchange coefficient between the mass flow of the coolant and the cylinder wall of the engine, m is the mass flow of the coolant of the engine, and a2, b2, and c2 are constants that are determined based on the type of the engine.

In some embodiments of the disclosure, the constants in the above equation (3) may be: a2=-2561.3, b2=186.6, and c2=971.9.

In some embodiments of the disclosure, after obtaining the first correspondence equation and the second correspondence equation, the function between the temperature of the combustion gas and the operating condition parameter of the engine is obtained by fitting, based on the double-layer flat plate model corresponding to the engine, the first correspondence equation and the second correspondence equation according to the steady-state heat exchange conservation equation between the coolant in the engine and the combustion gas.

In embodiments of the disclosure, by calculating the heat exchange coefficient between the cooling system of the engine, the functional relation between the temperature of the combustion gas and the operating condition parameter of the engine can be calculated based on the heat exchange coefficient without the need for other redundant calculations, thereby improving the calculation efficiency of the functional relation between the temperature of the combustion gas and the operating condition parameter of the engine, and further improving the efficiency of determining the outlet temperature of the target branch loop.

In some embodiments of the disclosure, in order to further improve the accuracy and the efficiency of predicting the temperature of the cooling system of the engine, obtaining the function between the temperature of the combustion gas and the operating condition parameter of the engine by fitting, based on the double-layer flat plate model corresponding to the engine, the first correspondence equation and the second correspondence equation according to the steady-state heat exchange conservation equation between the coolant in the engine and the combustion gas includes:

> obtaining a heat conduction thermal resistance equation within the engine by fitting the first correspondence equation and the second correspondence equation based on a heat exchange areas between an inner cylinder wall and a combustion gas, a heat exchange areas between an inner cylinder wall and a coolant, and a heat conduction area of the inner cylinder wall;
> based on the heat conduction thermal resistance equation and the double-layer flat plate model corresponding to the engine, according to the steady-state heat exchange conservation equation between the coolant and the combustion gas in the engine, obtaining a third equation among the combustion gas, an inlet temperature of the coolant and an outlet temperature of the coolant by accumulation of a length from an inlet to an outlet of the inner cylinder wall in the engine; and
> obtaining the function between the temperature of the combustion gas and the operating condition parameter of the engine by performing a quadratic function fitting on the third equation and the operating condition parameter of the engine.

The third equation may be a correspondence equation among the combustion gas, the inlet temperature of the coolant and the outlet temperature of the coolant.

In some embodiments of the disclosure, during the steady-state process, the temperature of the outer cylinder wall of the engine is very close to the temperature of the coolant. Therefore, it is considered that the amount of heat exchanged between the coolant and the outer cylinder wall is very small and has little effect on the change in the temperature of the coolant. When considering the change in the temperature of the coolant, the heat exchange between the coolant and the inner cylinder wall is mainly considered. The first correspondence equation and the second correspondence equation are fitted according to the heat exchange area between the inner cylinder wall and the combustion gas, the heat exchange area between the inner cylinder wall and the coolant, and the heat conduction area of the inner cylinder wall. According to a series heat exchange equation of steady-state heat exchange, the heat conduction thermal resistance equation within the engine can be obtained, which is shown in the following equation (5):

$$Q = (T_{gas} - T_w) / \left( \frac{1}{\frac{1}{\alpha 1 * A1} + \frac{1}{\lambda 1 * A2} + \frac{1}{\alpha 2 * A3}} \right) \qquad (5)$$

wherein, in equation (5), $T_{gas}$ is the temperature of the combustion gas; $T_w$ is the temperature of the coolant; A1 is the heat exchange area between the combustion gas and the inner cylinder wall; A2 is the heat conduction area of the inner cylinder wall; A3 is the heat exchange area between the inner cylinder wall and the coolant; $\lambda 1$ is a heat conduction coefficient of the inner cylinder wall, which is a constant relating to the material of the inner cylinder wall; $\alpha 1$ is the heat exchange coefficient between the operating condition parameter of the engine and the combustion gas; and $\alpha 2$ is the heat exchange coefficient between the mass flow of the coolant and the cylinder wall of the engine.

In some embodiments of the disclosure, for the sake of convenience in calculation, A1=A2=A3, and

$$\alpha = 1/\left(\frac{1}{\alpha 1}+\frac{1}{\lambda 1}+\frac{1}{\alpha 2}\right)$$, equation (6) can be obtained:

$$Q = \alpha * A * (T_{gas} - T_w) \qquad (6)$$

where, in equation (5), $\alpha = 1/\left(\frac{1}{\alpha 1}+\frac{1}{\lambda 1}+\frac{1}{\alpha 2}\right)$; A1=A2=A3=A; $T_{gas}$ is the temperature of the combustion gas; $T_w$ is the temperature of the coolant.

According to the steady-state heat exchange energy conservation equations (7) and (8), equations (7) and (8) are combined, and the length from the inlet to the outlet of the inner cylinder wall in the engine is accumulated to obtain the third equation (i.e., equation (9)) among the combustion gas, the inlet temperature of the coolant and the outlet temperature of the coolant:

$$Q = \dot{m} * C_p * dT_w \qquad (7)$$

where, in equation (7), $C_p$ is a specific heat at constant pressure of the coolant; $\dot{m}$ is the mass flow of the coolant of the engine; and $dT_w$ is a difference between the inlet temperature and the outlet temperature of the coolant.

$$Q = \alpha * dA * (T_{gas} - T_w) = \alpha * L_c * dx * (T_{gas} - T_w) \qquad (8)$$

where, in equation (8), $L_c$ is a characteristic length of the heat exchange component (e.g., the inner cylinder wall, the coolant, the combustion gas, or the outer cylinder wall), which indicates the heat exchange area corresponding to each unit length; $x$ is a length of the heat exchange component; $\alpha = 1/\left(\frac{1}{\alpha 1}+\frac{1}{\lambda 1}+\frac{1}{\alpha 2}\right)$; $T_{gas}$ is the temperature of the combustion gas; and $T_w$ is the temperature of the coolant.

$$\frac{T_{gas} - T_{w,\ out}}{T_{gas} - T_{w,in}} = e^{-\frac{\alpha * A}{m * C_p}} \qquad (9)$$

where, in equation (9), $T_{gas}$ is the temperature of the combustion gas; $T_{w,\ out}$ is a water outlet temperature of the coolant; $T_{w,in}$ is a water inlet temperature of the coolant; m is water mass; A1=A2=A3=A; $\alpha = 1/\left(\frac{1}{\alpha 1}+\frac{1}{\lambda 1}+\frac{1}{\alpha 2}\right)$; and $C_p$ is the specific heat at constant pressure of the coolant.

For the sake of simplicity of calculation, $N = e^{-\frac{\alpha * A}{m * C_p}}$, the equation (9) can be transformed into the equation (10):

$$T_{gas} = \left(T_{w,\ out} - N * T_{w,in}\right)/(1 - N) \qquad (10)$$

where, in equation (10), $T_{gas}$ is the temperature of the combustion gas; $T_{w,\ out}$ is the water outlet temperature of the coolant; $T_{w,in}$ is the water inlet temperature of the coolant.

In this way, the steady-state experimental data can be obtained to calculate $T_{gas}$ corresponding to each operating condition, so that a correspondence among the rotation speed and the torque of the engine and the combustion gas temperature is obtained.

It should be noted that the combustion temperature of the gas in the engine changes with the stroke, but due to the thermal inertia of the cylinder, the temperature of the cylinder wall does not change much. Therefore, it can be assumed that the combustion acts on the cylinder wall of the engine with an average temperature within four strokes. After the equation (10) is obtained, a quadratic function fitting can be performed on the equation (10) and the operating condition parameter of the engine, to obtain the functional relation between the temperature of the combustion gas and the operating condition parameter of the engine shown in equation (11):

$$T_{gas} = a * n^2 - b * T^2 - c * n * T + d * n + f * T + h \qquad (11)$$

where, in equation (11), $T_{gas}$ is a virtual combustion gas temperature; n is the rotation speed of the engine; T is the torque of the engine; a, b, c, d, f and h are constants that are determined based on the type of the engine.

In some embodiments of the disclosure, the constants in the above equation (11) may be: a=-9.04e-08, b=0.000844, c=7.737e-0.5, d=0.0178, f=0.552, and h=91.043.

In some embodiments of the disclosure, under the steady-state condition, the engine has reached a stable high temperature, so that an air inlet temperature at the beginning of the combustion is higher than an air inlet temperature for cold start. In order to better fit the air inlet temperature for cold start, the water inlet temperature is used to represent different cold start stages to modify this phenomenon. After modifying the above equation (11), equation (12) is obtained:

$$T_{gas} = (a * n^2 - b * T^2 - c * n * T + d * n + f * T + h)^{\frac{T_{w,in}}{T_{w,in,measure}}} \qquad (12)$$

where, in equation (12), $T_{w,in}$ is the air inlet temperature for cold start; $T_{w,in,measure}$ is the air inlet temperature at the beginning of combustion.

It should be noted that the temperatures in the modified equation (i.e., equation (12)) are all Kelvin temperatures.

In embodiments of the disclosure, according to the heat exchange area of the inner cylinder wall with the combustion gas and the heat exchange area of the inner cylinder wall with the coolant, and the heat conduction area of the inner cylinder wall, the heat conduction thermal resistance equation within the engine is obtained by fitting the first correspondence equation and the second correspondence equation. Based on the heat conduction thermal resistance equation, according to the steady-state heat exchange conservation equation between the coolant and the combustion gas in the engine, the third equation among the combustion gas, the inlet temperature of the coolant and the outlet temperature of the coolant is obtained. The function between the combustion gas temperature and the operating condition parameter of the engine is obtained by performing a quadratic function fitting on the third equation and the operating condition parameter of the engine. In this way, during the process of obtaining the function between the combustion gas temperature and the operating condition parameter of the engine, only the heat exchange areas of the inner cylinder wall with the combustion gas and the coolant and the heat conduction area of the inner cylinder wall are considered to obtain the accurate function between the combustion gas temperature and the operating condition parameter of the engine without the need of referring to other inaccurate parameters, and thus the accuracy of predicting the temperature of the cooling system of the engine can be improved. In addition, in the process of calculation, it is unnecessary to calculate the temperature of the internal portion of the heat exchanger, and only the temperatures at the inlet and the outlet of the heat exchanger are calculated, which improves the efficiency of calculation of the function between the combustion gas temperature and the operating condition parameter of the engine, and improves the efficiency of determining the outlet temperature of the target branch loop.

In some embodiments of the disclosure, when the type of the heat exchange component in the first target branch loop is a non-engine type, establishing the local flow model corresponding to the type of the heat exchange component in the first target branch loop includes:

establishing a physical model corresponding to the thermal management system based on obtained first flow data of the thermal management system;

obtaining a target physical model corresponding to the thermal management system by modifying a model parameter of the physical model based on the first flow data;

calculating, based on the target physical model, second flow data of coolant at the heat exchange component in the first target branch loop in the thermal management system;

generating training samples according to the second flow data and a target characteristic parameter for controlling operation of the thermal management system corresponding to the second flow data; and

performing training on a preset model based on the training samples, and obtaining the local flow model for determining a local flow of the coolant at the heat exchange component in the first target branch loop.

The first flow data can be key flow data of the thermal management system obtained during an experiment process, which can be overall flow data of the thermal management system, or local flow data of a certain key heat exchange component (e.g., a battery or an engine) in the thermal management system in FIG. 1.

In some embodiments of the disclosure, an overall physical model, i.e., the physical model in FIG. 1, corresponding to the thermal management system can be established by obtaining the first flow data of the thermal management system.

In some embodiments of the disclosure, how to establish the overall physical model corresponding to the thermal management system belongs to the related art and will not be repeated here.

The model parameters of the physical model may be a water pump pressure rise of the coolant, a pressure drop of heat exchange environment, and a loss of the coolant along the pipe wall, etc., which are used when establishing the physical model.

The preset model may be a model set in advance. After performing the training on the preset model, a local flow model for determining a local flow of the coolant at the target heat exchange component can be obtained. The preset model may be a neural network model, or other models that can be used to predict the local flow at the target heat exchange component, which is not limited here.

The target heat exchange component may be a heat exchange component for predicting the local flow, for example, may be the battery or the water pump in FIG. 1.

The target physical model can be a physical model corresponding to the thermal management system obtained by modifying the model parameters of the physical model.

Since it is known what the model parameters of the physical model of the thermal management system are in the case of a certain corresponding flow data, the model parameters of the physical model can be modified based on the first flow data, to obtain the target physical model corresponding to the thermal management system.

In some embodiments of the disclosure, the model parameters of the physical model may be modified manually by an engineer, or may be automatically modified by other means, which is not limited here.

The target heat exchange component may be a heat exchange component where the flow of the coolant is to be calculated. The target heat exchange component may be the battery, the engine or the heat exchanger shown in FIG. 1.

The second flow data may be flow data of the coolant at the target heat exchange component calculated based on the target physical model.

In some embodiments of the disclosure, certain flow of the coolant at some heat exchange components are unable to be measured during the experiment, but such flow can be very important. Moreover, the overall physical model of the thermal management system (i.e., the target physical model) can simply calculate the flow of the coolant at the heat exchange component, so that the flow data (the second flow data) of the coolant at the target heat exchange component in the thermal management system can be calculated according to the target physical model. For example, the flow of the coolant at the engine may be calculated based on the flow of the coolant at the battery in FIG. 1.

The target characteristic parameter may be a characteristic parameter for controlling the operation of the thermal management system or a characteristic parameter obtained after a preset processing is performed on the characteristic parameter for controlling the operation of the thermal management system.

In embodiments of the disclosure, the physical model corresponding to the thermal management system is established based on the obtained first flow data of the thermal management system. The target physical model corresponding to the thermal management system is obtained by modifying the model parameter of the physical model based on the first flow data. Based on the target physical model, the second flow data of the coolant at the target heat exchange component in the thermal management system is calculated. The training samples are generated according to the second flow data and its corresponding target characteristic parameter for controlling the operation of the thermal management system. The local flow model for determining the local flow of the coolant at the target heat exchange component is obtained by performing training on the preset model based on the training samples. In this way, the local flow model for accurately calculating the local flow of the coolant can be obtained, and the established local flow model can obtain the local flow of the coolant at the target component. Therefore, the calculation is simple and fast, and the obtained local flow of the coolant at the target component is accurate, which improves the accuracy and efficiency of obtaining the local flow of the coolant at the target component.

In some embodiments of the disclosure, in order to further accurately establish the local flow model for determining the local flow of the coolant at the target heat exchange component, before generating the training samples according to the second flow data and its corresponding target characteristic parameter for controlling the operation of the thermal management system, the method for modeling a thermal management system involved above may further include:

> obtaining a first characteristic parameter for controlling the operation of the thermal management system;
> determining at least one associated characteristic parameter associated with the first flow data according to a correspondence between the first characteristic parameter and the first flow data; and
> determining the target characteristic parameter according to each associated characteristic parameter.

The first characteristic parameter may be a direct characteristic parameter for controlling the operation of the thermal management system, such as a rotation speed of the water pump, a temperature, a valve opening degree, a rotation speed of the engine, and a torque of the engine.

The associated characteristic parameter may be a characteristic parameter obtained by expanding the first characteristic parameter according to a correspondence between the first characteristic parameter and the first flow data.

In an example, the first characteristic parameter may include a rotation speed of the water pump, a temperature, a valve opening degree, a rotation speed of the engine, and a torque of the engine. By expanding each of the above first characteristic parameters respectively, the associated characteristic parameters of the rotation speed of the water pump can be obtained, such as, a square of the rotation speed and a cube of the rotation speed. By expanding the temperature, the associated characteristic parameters of the temperature can be obtained, such as, a square of the temperature, a cubic of the temperature and a fourth power of the temperature. By expanding the valve opening degree, the associated characteristic parameters of the valve opening degree can be obtained, such as, a square of the valve opening degree and a cubic of the valve opening degree. By expanding the rotation speed and the torque of the engine, the associated characteristic parameters of the rotation speed and the torque of the engine can be obtained, such as, a product of the rotation speed and the torque of the engine, and an integral of the product of the rotation speed and the torque of the engine.

The target characteristic parameter may be a characteristic parameter based on each associated characteristic parameter, for example, a characteristic parameter obtained by performing a preset processing on each associated characteristic parameter.

The preset model may be model set in advance. After performing training on the preset model, the local flow model for determining the local flow of the coolant at the target heat exchange component may be obtained.

In embodiments of the disclosure, the first characteristic parameter for controlling the operation of the thermal management system is obtained. According to the correspondence between the first characteristic parameter and the first flow data, the at least one associated characteristic parameter associated with the first flow data is determined. According to each associated characteristic parameter, the target characteristic parameter is determined. In this way, the target characteristic parameter can be accurately determined, and the local flow model for determining the local flow of the coolant at the target heat exchange component can be accurately established.

In some embodiments of the disclosure, in order to accurately obtain the target characteristic parameter, determining the target characteristic parameter according to each associated characteristic parameter may include following steps.

Step A, each associated characteristic parameter is input into a feature screening model sequentially, and a predicted flow value corresponding to each associated characteristic parameter is obtained.

Step B, for each associated characteristic parameter, a mean square error between the predicted flow value corresponding to the associated characteristic parameter and a low flow value of the coolant in the thermal management system is calculated.

Step C, an associated characteristic parameter corresponding to the minimum mean square error is determined as a first candidate characteristic parameter.

Step D, an output of the feature screening model is updated to a high flow value of the coolant in the thermal management system, and steps A to C are performed again to obtain a second candidate characteristic parameter.

Step E, the first candidate characteristic parameter and the second candidate characteristic parameter are determined as target characteristic parameters.

The feature screening model may be obtained by learning a relation between each associated characteristic parameter and a flow value of the coolant in the thermal management system.

In some embodiments of the disclosure, the feature screening model may be a generalized regression neural network (GRNN) based on joint probability distribution. An input of the model can be various associated characteristic parameters, and an output can be a flow value of the coolant in the thermal management system.

The predicted flow value may be a flow value corresponding to each associated characteristic parameter predicted by the feature screening model based on each associated characteristic parameter after inputting each associated characteristic parameter into the feature screening model sequentially.

The low flow value may be a flow value that is less than or equal to a first preset flow threshold. The low flow value may be a lower flow value within a flow range of the coolant.

The first preset flow threshold may be a preset threshold of the low flow value. For example, if the flow range of the coolant is between 500 and 1000, the low flow value may be between 500 and 700.

The first candidate characteristic parameter may be an associated characteristic parameter corresponding to the minimum mean square error in the mean square errors between the predicted flow values corresponding to the respective calculated associated characteristic parameters and the low flow value of the coolant in the thermal management system.

The high flow value may be a flow value greater than or equal to a second preset flow threshold. The high flow value may be a higher flow value within the flow range of the coolant.

The second preset flow threshold may be a preset threshold of the high flow value. For example, if the flow range of the coolant is between 500 and 1000, the high flow value may be between 700 and 1000.

The second candidate characteristic parameter may be an associated characteristic parameter corresponding to the minimum mean square error in mean square errors between the predicted flow values corresponding to the respective calculated associated characteristic parameters and the high flow value of the coolant in the thermal management system.

In an example, if the associated characteristic parameters include the product of the rotation speed and the torque of the engine, the square of a rotation speed of the water pump and a cubic of the rotation speed of the water pump, all the associated characteristic parameters are traversed. That is, the product of the rotation speed and the torque of the engine, the square of the rotation speed of the water pump and the cubic of the rotation speed of the water pump are input into the feature screening model respectively, and the predicted flow values corresponding to the product of the rotation speed and the torque of the engine, the square of the rotation speed of the water pump and the cubic of the rotation speed of the water pump are respectively obtained. For example, the predicted flow value corresponding to the product of the rotation speed and the torque of the engine is 550, the predicted flow value corresponding to the square of the rotation speed of the water pump is 900, and the predicted flow value corresponding to the cubic of the rotation speed of the water pump is 950. If a current dependent variable (i.e., a flow standard for an output of the feature screening model) of the feature screening model is 600, a mean square error between 550 and 600, a mean square error between 900 and 600, and a mean square error between 950 and 600 are calculated respectively. By comparison, it is determined that the mean square error between 550 and 600 is minimum, and the associated characteristic parameter corresponding to 550 (i.e., the product of the rotation speed and the torque of the engine) can be determined as the first candidate characteristic parameter.

With reference to the above example, the output of the feature screening model is replaced with a high flow value (e.g., 850), the product of the rotation speed and the torque of the engine, the square of the rotation speed of the water pump and the cubic of the rotation speed of the water pump are input into the feature screening model respectively, and the predicted flow values corresponding to the product of the rotation speed and the torque of the engine, the square of the rotation speed of the water pump and the cubic of the rotation speed of the water pump are obtained respectively. For example, the predicted flow value corresponding to the product of the rotation speed and the torque of the engine is 550, the predicted flow value corresponding to the square of the rotation speed of the water pump is 900, and the predicted flow value corresponding to the cubic of the rotation speed of the water pump is 950. A mean square error between 550 and 850, a mean square error between 900 and 850, and a mean square error between 950 and 850 can be calculated respectively. By comparison, it is determined that the mean square error between 900 and 850 is minimum, so that the associated characteristic parameter corresponding to 900 (i.e., the square of the rotation speed of the water pump) can be determined as the second candidate characteristic parameter.

The first candidate characteristic parameter and the second candidate characteristic parameter are used as the target characteristic parameters. That is, the product of the rotation speed and the torque of the engine, and the square of the rotation speed of the water pump are used as the final target characteristic parameters.

In some embodiments of the disclosure, in order to avoid redundancy of the target characteristic parameters used to establish the local flow model for determining the local flow of the coolant at the target heat exchange component, after obtaining the first candidate characteristic parameter and the second candidate characteristic parameter, the first candidate characteristic parameter and the second candidate characteristic parameter can be ranked in an ascending order according to their mean square errors with the flow value of the coolant in the thermal management system, and the top N characteristic parameters are obtained as the final target characteristic parameters, which can ensure precision and avoid feature redundancy.

In embodiments of the disclosure, the associated characteristic parameters are screened using the characteristic screening model to select the target characteristic parameters that can be used to establish the local flow model for determining the local flow of the coolant at the target heat exchange component, and thus an accurate local flow model for determining the local flow of the coolant at the target heat exchange component can be obtained.

In some embodiments of the disclosure, in order to obtain an accurate local flow model, performing training on the preset model based on the training samples and obtaining the local flow model for determining the local flow of the coolant at the target heat exchange component includes:

obtaining at least one initial local flow model for determining the local flow of the coolant at the target heat exchange component by performing training on the preset model based on the training samples;
obtaining an accuracy of each initial local flow model in calculating the local flow of the coolant at the target heat exchange component; and
based on the accuracy, selecting an initial local flow model with the highest accuracy from the initial local flow models as the local flow model for determining the local flow of the coolant at the target heat exchange component.

The initial local flow model may be a model obtained by performing training on the preset model using the training samples.

In some embodiments of the disclosure, the acquired second flow data and its corresponding target characteristic parameters for controlling the operation of the thermal management system may be randomly classified into a training set and a test set (for example, they may be classified in a ratio of 85% and 15% respectively), and training may be performed on the preset model using the training samples to obtain at least one initial local flow model for determining the local flow of the coolant at the target heat exchange component, and then k test may be performed to calculate the accuracy of the local flow of the coolant at the target heat exchange component predicted by each initial local flow model. According to the accuracy, the initial local flow model with the highest accuracy is selected from the initial local flow models, and then the selected initial local flow model with the highest accuracy is tested and verified using the test set to obtain a verification result (i.e., whether the initial local flow model with the highest accuracy can accurately predict the local flow at the target heat exchange component). If the verification result is good, the initial local flow model with the highest accuracy may be used as a local training model for determining the local flow of the coolant at the target heat exchange component, so that the optimal accurate local flow model can be obtained.

In some embodiments of the disclosure, the at least one initial local flow model for determining the local flow of the coolant at the target heat exchange component can be tested and verified using the test set, and the test results of the initial local flow models can be obtained. The accuracy and the test precision of the local flow of the coolant at the target heat exchange component predicted by each of the initial local flow models can be calculated through k test. A local training model for determining the local flow of the coolant at the target heat exchange component is selected based on the accuracy and the test precision. In detail, the local training model for determining the local flow of the coolant at the target heat exchange component is selected based on both the accuracy and the test accuracy.

In embodiments of the disclosure, by performing training on the preset model using the training samples, at least one initial local flow model for determining the local flow of the coolant at the target heat exchange component is obtained. The accuracy of the local flow of the coolant at the target heat exchange component predicted by each initial local flow model is calculated. According to the accuracy, the initial local flow model with the highest accuracy is selected from the initial local flow models as the local training model for determining the local flow of the coolant at the target heat exchange component, so that the most accurate local flow model can be obtained.

In some embodiments of the disclosure, determining the temperature of the first target branch loop based on the flow corresponding to the first target branch loop and the temperature delay model corresponding to the delay volume of the first target branch loop includes:

updating a temperature delay model for flow accumulation corresponding to the first target branch loop based on a first temperature of the thermal management system at a first moment, a flow value of the first target branch loop at the first moment, and the delay volume corresponding to the first target branch loop;

determining a delay flow value of the first target branch loop at the first moment according to the flow value of the first target branch loop at the first moment and the delay volume corresponding to the first target branch loop; and

determining a temperature corresponding to the delay flow value of the first target branch loop at the first moment in the updated temperature delay model for flow accumulation corresponding to the first target branch loop, as a temperature of the first target branch loop at a second moment.

The first moment may be an initial moment at which the outlet temperature of the thermal management system is to be calculated, or it may also be any moment after the initial moment and before a target moment.

The initial moment may be a moment at which the outlet temperature of the thermal management system is started to be predicted.

The first temperature may be a temperature value of the outlet temperature of the thermal management system at the initial moment.

The target moment may be a moment at which the outlet temperature of the thermal management system is to be predicted.

The second moment may be located after the first moment, and the second moment may be spaced from the first moment by one unit time step.

In this embodiment, a temperature delay model for flow accumulation may be set for each branch loop separately, and an output temperature of the outlet of each branch loop at a certain moment may be determined based on its corresponding temperature delay model for flow accumulation.

An input of the temperature delay model for flow accumulation of a certain branch loop (e.g., the first target branch loop) is a delay flow value of the branch loop at a certain moment, and an output is the temperature of the outlet of the branch loop at the certain moment.

The delay flow value of a branch loop at a certain moment may be determined based on a flow value of the branch loop accumulated from an initial moment to the certain moment, i.e., an accumulated flow value of the branch loop at the certain moment, and a delay volume of the branch loop. In some embodiments, for example, the flow value of the branch loop accumulated from the initial moment to the certain moment is $\int \dot{Q}$, and the delay volume of the branch loop is $Vi$, the delay flow value of the branch loop at the certain moment is: $\int \dot{Q} - Vi.$

The accumulated flow value of the branch loop at a certain moment may be a sum of the flow value at the certain moment and a historical flow value. The historical flow value at a certain moment is a sum of flow values from the initial moment to a previous moment of the certain moment.

A flow value at a certain moment can be determined based on a control parameter value at the certain moment and can be obtained based on the above local flow model in implementations.

The temperature delay model for flow accumulation can be understood as a model based on table searching. For ease of understanding, as illustrated in FIG. 8, when determining the temperature at a certain moment, the accumulated flow value at the certain moment can be determined first, and then based on the delay volume, a delay flow value at the certain moment is determined. At last, a temperature corresponding to the delay flow value is determined as the temperature at the certain moment.

In addition, the temperature delay model for flow accumulation is updated in real time during an iterative calculation process. The temperature delay model for flow accumulation is updated every time an iterative operation is performed. In an implementation, in an iterative operation, a temperature of the $i^{th}$ branch loop may affect the update of the temperature delay model for flow accumulation of the $(i+1)^{th}$ branch loop, thereby improving the reliability of the prediction.

It can be known from the above content that a second temperature of the thermal management system at the second moment can be understood as an output temperature of the $N^{th}$ branch loop. Therefore, in this embodiment, after updating the temperature delay model for flow accumulation corresponding to each branch loop, an accumulated flow value of the $P^{th}$ branch loop at the first moment can be calculated, to consider the influence of heat conduction delay. Based on the accumulated flow value and the virtual volume of the $P^{th}$ branch loop, a delay flow value of the $P^{th}$ branch loop at the first moment can be determined and input into the temperature delay model for flow accumulation corresponding to the $P^{th}$ branch loop, to obtain an output temperature of the $P^{th}$ branch loop, i.e., the second temperature of the thermal management system at the second moment.

In embodiments of the disclosure, the temperature delay model for flow accumulation corresponding to the first target branch loop is updated based on the first temperature of the thermal management system at the first moment, the flow value of the first target branch loop at the first moment and the delay volume corresponding to the first target branch loop. The delay flow value of the first target branch loop at the first moment is determined according to the flow value of the first target branch loop at the first moment and the delay volume corresponding to the first target branch loop. In the updated temperature delay model for flow accumulation corresponding to the first target branch loop, the temperature corresponding to the delay flow value of the first target branch loop at the first moment is determined as the temperature of the first target branch loop at the second moment, so that the temperature of the first target branch loop at the second moment can be accurately determined.

In some embodiments of the disclosure, updating the temperature delay model for flow accumulation corresponding to the first target branch loop based on the first temperature of the thermal management system at the first moment, the flow value of the first target branch loop at the first moment and the delay volume corresponding to the target branch loop includes:

calculating a reference temperature of the first target branch loop according to a target object and the flow value of the first target branch loop at the first moment; and
updating a temperature delay model for flow accumulation corresponding to a second target branch loop according to the reference temperature and a flow value of the second target branch loop at the first moment, wherein the second target branch loop is a branch loop that is adjacent to the first target branch loop in the target model and is located before the first target branch loop along a flow direction of the coolant.

Where, u is an integer greater than or equal to 1 and less than N; N is a number of branch loops in the target model; when u is equal to 1, for the second target branch loop, the target object may be the first temperature.

When u is greater than 1, the target object may be the output temperature of the second target branch loop at the second moment. The output temperature of the second target branch loop at the second moment is determined based on the flow value of the second target branch loop at the first moment, the delay volume corresponding to the second target branch loop, and the temperature delay model for flow accumulation corresponding to the updated second target branch loop.

For the temperature delay model for flow accumulation corresponding to the first branch loop, a first reference temperature may be calculated according to the first temperature and the flow value of the first branch loop at the first moment, and the temperature delay model for flow accumulation corresponding to the first branch loop is updated according to the first reference temperature, and the flow value of the first branch loop at the first moment.

In an implementation, an accumulated flow value of the first branch loop at the first moment can be determined according to the flow value of the first branch loop at the first moment and a historical flow value of the first branch loop at the first moment. A delay flow value of the first branch loop at the first moment can be determined according to the accumulated flow value of the first branch loop at the first moment and the delay volume corresponding to the first branch loop. The method for determining the above-mentioned flow value, the accumulated flow value and the delay flow value is the same as the method for determining that of the $P^{th}$ branch loop mentioned above. The detailed description can refer to the above-mentioned relevant description, which will not be repeated here.

Afterwards, the delay flow value of the first branch loop at the first moment and the first reference temperature may be added to the temperature delay model for flow accumulation corresponding to the first branch loop. As illustrated in FIG. 8, a first point may be added to the curve. A horizontal coordinate corresponding to the first point is the delay flow value of the first branch loop at the first moment, and a vertical coordinate corresponding to the first point is the first reference temperature.

For the temperature delay model for flow accumulation corresponding to the second branch loop, the second reference temperature can be calculated according to the output temperature of the first branch loop at the second moment and the flow value of the second branch loop at the first moment. According to the second reference temperature and the flow value of the second branch loop at the first moment, the temperature delay model for flow accumulation corresponding to the first branch loop is updated.

It can be seen from the foregoing that the output temperature of each branch loop can be determined based on the temperature delay model for flow accumulation of each branch loop. In an implementation, the output temperature of the first branch loop at the second moment can be determined according to the flow value of the first branch loop at the first moment, the delay volume corresponding to the first branch loop, and the updated temperature delay model for flow accumulation corresponding to the first branch loop. The specific determination method can be referred to the above-mentioned related description, which will not be repeated here.

The updating of the temperature delay models for flow accumulation corresponding to other branch loops can be similar to the updating of the temperature delay model for flow accumulation corresponding to the second branch loop, and is not described in detail here to avoid repetition.

Through the above method, the temperature delay model for flow accumulation corresponding to each branch loop can be updated, thereby improving the reliability of temperature prediction.

The determination of the reference temperature is described below.

In some embodiments, the reference temperature can be obtained by searching a table.

In other embodiments, the reference temperature may be obtained based on a model. In this case, calculating the reference temperature of the first target branch loop according to the target object and the flow value of the first target branch loop at the first moment may include:

obtaining the reference temperature of the first target branch loop by inputting the target object and the flow value of the first target branch loop at the first moment into a heat exchange model corresponding to the first target branch loop.

The heat exchange model is configured to:

determine a first value according to the flow value of the first target branch loop at the first moment and a characteristic length corresponding to the first target branch loop; and
determine the reference temperature of the first target branch loop according to the first value and the target object.

In this embodiment, a heat exchange model may be set for each branch loop respectively, and the temperature delay model for updating flow accumulation corresponding to a certain branch loop may be determined based on the heat exchange model of the certain branch loop.

In an implementation, the first value may be a ratio of the flow value of the first target branch loop at the first moment to the characteristic length corresponding to the branch loop, so that the lack of flow accuracy can be compensated, thereby improving the reliability of temperature prediction.

The characteristic length can be understood as a heat exchange area corresponding to a unit length. The characteristic lengths corresponding to different branch loops may be different, which may be set according to the experimental data.

To facilitate the understanding of the heat exchange model, an example of establishing a heat exchange model for a battery branch is illustrated as follows.

Under a steady-state condition, a heat exchange component (for example, the heat exchange component is a battery in the battery branch) can conduct heat to the coolant to cause the temperature of the coolant to change. The change in the heat of the coolant caused by the change of temperature is shown in the above equation (7).

Based on the heat exchange relation between the heat exchange component and the coolant shown in the above equation (8), the equation (7) and the equation (8) are combined, and the length of the heat exchange component is accumulated to obtain a relation between the temperature of the heat exchange component and the outlet temperature as shown in equation (9).

In this way, the output temperature of the battery branch can be obtained based on equation (9).

In embodiments of the disclosure, the output temperature of the branch loop can be determined according to the characteristic length corresponding to the branch loop, so that the lack of flow accuracy can be compensated, thereby improving the reliability of temperature prediction.

It should be noted that the method for modeling a thermal management system provided in the embodiments of the disclosure may be executed by an apparatus for modeling a thermal management system, or a control module in the apparatus for modeling a thermal management system may be used for executing the method for modeling a thermal management system.

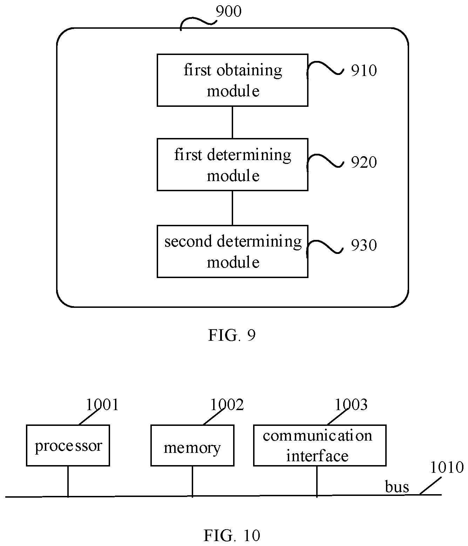

Based on the same inventive concept as the above-mentioned method for modeling a thermal management system, the disclosure also provides an apparatus for modeling a thermal management system. The apparatus for modeling a thermal management system provided by the embodiment of the disclosure is described in detail below with reference to FIG. 9.

FIG. 9 is a schematic diagram of an apparatus for modeling a thermal management system provided by an embodiment of the disclosure.

As illustrated in FIG. 9, the apparatus 900 for modeling a thermal management system includes: a first obtaining module 910, a first determining module 920, and a second determining module 930.

The first obtaining module 910 is configured to obtain a plurality of temperature nodes in the thermal management system of a vehicle and a plurality of branch loops in the thermal management system.

The first determining module 920 is configured to determine temperature nodes that are unable to be combined in the thermal management system based on a heat exchange component in each of the plurality of branch loops and/or warm water points of coolant in at least two of the plurality of branch loops.

The second determining module 930 is configured to obtain a target model corresponding to the thermal management system by combining the plurality of temperature nodes in the thermal management system according to a preset combination policy based on the temperature nodes that are unable to be combined in the thermal management system.

In some embodiments of the disclosure, the first obtaining module obtains the plurality of temperature nodes in the thermal management system and the plurality of branch loops in the thermal management system. The first determining module determines the temperature nodes that satisfy a preset condition but are unable to be combined in the thermal management system based on the heat exchange component in each branch loop, and/or, warm water points of the coolant in at least two of the plurality of branch loops. The second determining module is used to combine the plurality of temperature nodes in the thermal management system according to the preset combination policy based on the determined temperature nodes that are unable to be combined, to obtain the target model corresponding to the thermal management system. Since the temperature nodes in the thermal management system can be continuously combined according to the preset combination policy, the number of temperature nodes in the target model finally obtained is less than the number of temperature nodes in the thermal management system at the beginning, thereby simplifying the structure of the thermal management system. In this way, when calculating an outlet water temperature in the thermal management system, there is no need to calculate the temperatures of too many temperature nodes, thereby improving the calculation efficiency of the outlet water temperature and saving computing power.

In some embodiments of the disclosure, in order to further improve the efficiency of calculating the outlet temperature of the coolant, the second determining module 930 may include a first establishing unit, a first determining unit, a second determining unit, and a third determining unit.

The first establishing unit is configured to establish a delay volume corresponding to the heat exchange component in each branch loop based on the temperature nodes that are unable to be combined in the thermal management system.

The first determining unit is configured to obtain a first model corresponding to the thermal management system by simplifying the heat exchange component in each branch loop of the thermal management system based on the delay volume corresponding to the heat exchange component in each branch loop.

The second determining unit is configured to obtain a second model corresponding to the thermal management system by combining temperature nodes having a same temperature in different branch loops in the first model.

The third determining unit is configured to obtain the target model corresponding to the thermal management system by combining two adjacent water mixing points without heat conduction in the second model into one water mixing point.

In some embodiments of the disclosure, in order to accurately establish the delay volume corresponding to the heat exchange component in each branch loop, the first establishing unit is configured to:

determine N initial volumes one-to-one corresponding to the plurality of branch loops in the thermal management system according to an open-loop model, in which an input of the open-loop model is a control parameter value of the thermal management system at a $k^{th}$ moment, and an output of the open-loop model is a temperature of the thermal management system at the $k^{th}$ moment; and

close the open-loop model, and obtain N delay volumes one-to-one corresponding to the plurality of branch loops in the thermal management system by modifying the N initial volumes through the closed open-loop model.

In some embodiments of the disclosure, in order to accurately calculate the outlet temperature, the apparatus for modeling a thermal management system mentioned above may further include: a second establishing module, a calculating module and a fifth determining module.

The second establishing module is configured to establish a local flow model of a second target branch loop based on a flow relation between branch loops in the target model, in which the second target branch loop is at least one branch loop of the branch loops.

The calculating module is configured to calculate a flow corresponding to the second target branch loop based on the local flow model of the second target branch loop.

The fifth determining module is configured to determine a temperature of the second target branch loop based on the flow corresponding to the second target branch loop and a temperature delay model corresponding to a delay volume of the second target branch loop.

In some embodiments of the disclosure, the second establishing module may include a fourth determining unit and a second establishing unit.

The fourth determining unit is configured to determine the second target branch loop based on a number of the branch loops in the target model and a flow equation between the branch loops in the target model.

The second establishing unit is configured to establish a local flow model corresponding to a type of a heat exchange component in the second target branch loop based on the type of the heat exchange component in the second target branch loop.

In some embodiments of the disclosure, when the type of the heat exchange component in the second target branch loop is an engine type, the second establishing unit is configured to:

obtain a first correspondence equation of a heat exchange coefficient between an operating condition parameter of an engine and combustion gas by fitting a historical operating condition parameter of the engine and a heat exchange coefficient between the historical operating condition parameter and the combustion gas;

obtain a second correspondence equation of a heat exchange coefficient between a mass flow of the coolant and a cylinder wall of the engine by fitting a mass flow of coolant in the second target branch loop, and a heat exchange coefficient between the mass flow of the coolant and the cylinder wall of the engine; and

obtain a function between a temperature of the combustion gas and the operating condition parameter of the engine by fitting, based on a double-layer flat plate model corresponding to the engine, the first correspondence equation and the second correspondence equation according to a steady-state heat exchange conservation equation between the coolant in the engine and the combustion gas, in which the function between the temperature of the combustion gas and the operating condition parameter of the engine is the local flow model corresponding to the type of the heat exchange component in the second target branch loop.

In some embodiments of the disclosure, when the type of the heat exchange component in the second target branch loop is a non-engine type, the second establishing unit is configured to:

establish a physical model corresponding to the thermal management system based on obtained first flow data of the thermal management system;

obtain a target physical model corresponding to the thermal management system by modifying a model parameter of the physical model based on the first flow data;

calculate, based on the target physical model, second flow data of coolant at the heat exchange component in the second target branch loop in the thermal management system;

generate training samples according to the second flow data and a target characteristic parameter for controlling operation of the thermal management system corresponding to the second flow data; and

perform training on a preset model based on the training samples, and obtain the local flow model for determining a local flow of the coolant at the heat exchange component in the second target branch loop.

The apparatus for modeling a thermal management system provided in the embodiment of the disclosure can be used to execute the method for modeling a thermal management system provided in the above-mentioned method embodiments. Its implementation principle and technical effect are similar and are not repeated herein for the sake of brevity.

Based on the same inventive concept, an embodiment of the disclosure also provides a device for modeling a thermal management system. The device includes a processor, a memory, and programs or instructions stored in the memory and executable by the processor. When the programs or instructions are executed by the processor, the steps of the method for modeling a thermal management system described in any of the above embodiments of the disclosure are implemented.

FIG. 10 is a schematic diagram of a device for modeling a thermal management system provided by an embodiment of the disclosure. As illustrated in FIG. 10, the device for modeling a thermal management system includes: a processor 1001 and a memory 1002 storing computer programs or instructions.

In some specific embodiments, the processor 1001 may include a central processing unit (CPU) or an Application Specific Integrated Circuit (ASIC), or may be implemented as one or more integrated circuits to implement the embodiments of the disclosure.

The memory 1002 may include a large-capacity memory for storing data or instructions. By way of example and not limitation, the memory 1002 may include a hard disk drive (HDD), a floppy disk drive, a flash memory, an optical disk, a magnetic disk, a magnetic tape, or a Universal Serial Bus (USB) drive or a combination of two or more of these. When appropriate, the memory 1002 may include removable or non-removable (or fixed) mediums. If appropriate, the memory 1002 may be located inside or outside an integrated gateway disaster recovery device. In specific embodiments, the memory 1002 is a non-volatile solid state memory. The memory includes a Read-Only Memory (ROM), a random-access memory (RAM), a magnetic disk storage medium device, an optical storage medium device, a flash memory device, an electrical, optical or other physical/tangible memory storage device. Therefore, typically, the memory includes one or more tangible (non-transitory) computer-readable storage mediums (e.g., memory devices) encoded with software including computer-executable instructions. When the software is executed (e.g., by one or more processors), the operations described in the method for modeling a thermal management system provided in the above-mentioned embodiments can be implemented.

The processor 1001 reads and executes the computer programs or instructions stored in the memory 1002, to implement the method for modeling a thermal management system provided by any embodiment of the disclosure.

In an example, the device for modeling a thermal management system may also include a communication interface 1003 and a bus 1010. As illustrated in FIG. 11, the processor 1001, the memory 1002, and the communication interface 1003 are connected via a bus 1010 to communicate with each other.

The communication interface 1003 is mainly used to realize communication between various modules, devices, units and/or devices in the embodiments of the disclosure.

The bus 1010 includes hardware, software or both, and is used to couple the components of the device for modeling a thermal management system. By way of example, but not limitation, the bus may include an Accelerated Graphics Port (AGP) or other graphics bus, an Extended Industry Standard Architecture (EISA) bus, a Front Side BUS (FSB), a Hyper Transport (HT) interconnection, an Industrial Standard Architecture (ISA) bus, an unlimited bandwidth interconnect, a Low Pin Count (LPC) bus, a memory bus, a Micro Channel Architecture (MCA) bus, a Peripheral Component Interconnection (PCI) bus, a PCI-Express (PCI-X) bus, a Serial Advanced Technology Attachment (SATA) bus, a Video Electronics Standards Association Local Bus (VLB) or other suitable bus or a combination of two or more of these. When appropriate, the bus 1010 may include one or more buses. Although a specific bus is described and illustrated in the embodiments of the disclosure, the disclosure contemplates any suitable bus or interconnection.

The device for modeling a thermal management system may perform the method for modeling a thermal management system in the embodiments of the disclosure, to realize the method for modeling a thermal management system described in FIG. 3.

In addition, in combination with the method for modeling a thermal management system in the above embodiments, the embodiment of the disclosure also provides a readable storage medium having program instructions stored thereon for implementation. When the program instructions are executed by a processor, the method for modeling a thermal management system described in any one of the above embodiments is implemented.

In addition, in combination with the method for modeling a thermal management system in the above embodiments, the embodiment of the disclosure also provides a vehicle for implementation. The vehicle includes the apparatus for modeling a thermal management system, the device for modeling a thermal management system, or the computer-readable storage medium in the embodiments described above.

In addition, in combination with the method for modeling a thermal management system in the above embodiments, the embodiment of the disclosure also provides a computer program product including computer programs. When the computer programs are executed by a processor, the method for modeling a thermal management system described in any one of the above embodiments is implemented.

In addition, in combination with the method for modeling a thermal management system in the above embodiments, the embodiment of the disclosure also provides a computer program including computer program codes. When the computer program codes are executed by a computer, the method for modeling a thermal management system described in any one of the above embodiments is implemented.

It should be noted that the aforementioned explanations of the embodiments relating to the method and the apparatus are also applicable to the device for modeling a thermal management system, the vehicle, the computer-readable storage medium, the computer program product and the computer program, and will not be repeated here.

It should be noted that the disclosure is not limited to the specific configurations and processes described above and shown in the drawings. For the sake of brevity, a detailed description of known methods is omitted here. In the above embodiments, several specific steps are described and illustrated as examples. However, the method and procedure of the disclosure is not limited to the specific steps described and shown herein. Those skilled in the art may make various changes, modifications and additions, or change the order of the steps after understanding the spirit of the disclosure.

The functional blocks shown in the structural block diagrams described above can be implemented as hardware, software, firmware or a combination thereof. When implemented in hardware, it may be, for example, an electronic circuit, an ASIC, an appropriate firmware, a plug-in, or a function card, and the like. When implemented in software, the elements of the disclosure are programs or code segments used to perform a required task. The programs or code segments can be stored in a machine-readable medium or transmitted over a transmission medium or communication link via a data signal carried in a carrier. The "machine-readable medium" may include any medium that is capable to store or transmit information. Examples of the machine-readable medium include electronic circuits, semiconductor memory devices, ROMs, flash memories, erasable ROMs (EROMs), floppy disks, CD-ROMs, optical disks, hard disks, fiber optic mediums, radio frequency (RF) links, and the like. The code segments may be downloaded via a computer network such as the Internet, an intranet, or the like.

It should also be noted that the exemplary embodiments mentioned in the disclosure describe some methods or systems based on a series of steps or devices. However, the disclosure is not limited to the order of the above steps. That is, the steps may be executed in the order mentioned in the embodiments or in any order different from the order in the embodiments, or the steps may be executed simultaneously.

Aspects of the disclosure are described above with reference to flowcharts and/or block diagrams of methods, apparatus (systems) and computer program products according to the embodiments of the disclosure. It is understood that each block of the flowcharts and/or block diagrams and any combinations of the blocks in the flowcharts and/or block diagrams can be implemented by computer program instructions. These computer program instructions may be provided to a processor of a general-purpose computer, a dedicated computer, or other programmable data processing devices to produce a machine, so that these instructions executed by the processor of the computer or other programmable data processing devices can realize the implementation of the functions/actions specified in one or more blocks of the flowcharts and/or block diagrams. Such processor may be, but is not limited to, a general-purpose processor, a dedicated processor, a special application processor, or a field programmable logic circuit. It is understood that each block in the block diagrams and/or flowcharts and any combinations of blocks in the block diagrams and/or flowcharts can also be implemented by dedicated hardware that performs specified functions or actions or by a combination of a dedicated hardware and computer instructions.

It is noted that, in this disclosure, relational terms such as "first" and "second" are merely used to distinguish one entity or operation from another entity or operation, and do not necessarily require or imply any actual relation or order between these entities or operations. Moreover, the term "comprises" or any other variation thereof is intended to cover non-exclusive inclusions, such that a process, method, article, or apparatus that includes a series of elements includes not only those elements but also other elements not expressly listed, or also includes elements inherent to such process, method, article, or apparatus. Without further constraints, an element defined by the phrase "comprising a..." does not exclude the existence of other identical elements in the process, method, article or apparatus comprising the element.

The above description is only a specific implementation of the disclosure. Those skilled in the art can clearly understand that for the convenience and brevity of description, the specific working processes of the system, modules and units described above can refer to the corresponding processes in the aforementioned method embodiments and will not be repeated here. It should be understood that the protection scope of the disclosure is not limited thereto, and any technician familiar with the technical field can easily think of various equivalent modifications or substitutions within the technical scope disclosed in the disclosure, and these modifications or substitutions should be included in the protection scope of the disclosure.

All the embodiments of the disclosure may be implemented individually or in combination with other embodiments, which are deemed to be within the protection scope required by the disclosure.

## Claims

1.   A method for modeling a thermal management system, comprising:

obtaining a plurality of temperature nodes in the thermal management system of a vehicle and a plurality of branch loops in the thermal management system;
determining temperature nodes that are unable to be combined in the thermal management system based on a heat exchange component in each of the plurality of branch loops and/or warm water points of coolant in at least two of the plurality of branch loops; and

obtaining a target model corresponding to the thermal management system by combining the plurality of temperature nodes in the thermal management system according to a preset combination policy based on the temperature nodes that are unable to be combined in the thermal management system.

2. The method of claim 1, wherein obtaining the target model corresponding to the thermal management system by combining the plurality of temperature nodes in the thermal management system according to the preset combination policy based on the temperature nodes that are unable to be combined in the thermal management system comprises:

establishing a delay volume corresponding to the heat exchange component in each branch loop based on the temperature nodes that are unable to be combined in the thermal management system;
obtaining a first model corresponding to the thermal management system by simplifying the heat exchange component in each branch loop of the thermal management system based on the delay volume corresponding to the heat exchange component in each branch loop;
obtaining a second model corresponding to the thermal management system by combining temperature nodes having a same temperature in different branch loops in the first model; and
obtaining the target model corresponding to the thermal management system by combining two adjacent water mixing points without heat conduction in the second model into one water mixing point.

3. The method of claim 2, wherein establishing the delay volume corresponding to the heat exchange component in each branch loop comprises:

determining N initial volumes one-to-one corresponding to the plurality of branch loops in the thermal management system according to an open-loop model, wherein an input of the open-loop model is a control parameter value of the thermal management system at a $k^{th}$ moment, and an output of the open-loop model is a temperature of the thermal management system at the $k^{th}$ moment; and
closing the open-loop model, and obtaining N delay volumes one-to-one corresponding to the plurality of branch loops in the thermal management system by modifying the N initial volumes through the closed open-loop model.

4. The method of any one of claims 1-3, after obtaining the target model corresponding to the thermal management system, further comprising:

establishing a local flow model of a second target branch loop based on a flow relation between branch loops in the target model, wherein the second target branch loop is at least one branch loop of the branch loops;
calculating a flow corresponding to the second target branch loop based on the local flow model of the second target branch loop; and
determining a temperature of the second target branch loop based on the flow corresponding to the second target branch loop and a temperature delay model corresponding to a delay volume of the second target branch loop.

5. The method of claim 4, wherein establishing the local flow model of the second target branch loop based on the flow relation between the branch loops in the target model comprises:

determining the second target branch loop based on a number of the branch loops in the target model and a flow equation between the branch loops in the target model; and
establishing a local flow model corresponding to a type of a heat exchange component in the second target branch loop based on the type of the heat exchange component in the second target branch loop.

6. The method of claim 5, wherein the type of the heat exchange component in the second target branch loop is an engine type, and establishing the local flow model corresponding to the type of the heat exchange component in the second target branch loop comprises:

obtaining a first correspondence equation of a heat exchange coefficient between an operating condition parameter of an engine and combustion gas by fitting a historical operating condition parameter of the engine and a heat exchange coefficient between the historical operating condition parameter and the combustion gas;
obtaining a second correspondence equation of a heat exchange coefficient between a mass flow of the coolant and a cylinder wall of the engine by fitting a mass flow of coolant in the second target branch loop and a heat exchange coefficient between the mass flow of the coolant and the cylinder wall of the engine; and
obtaining a function between a temperature of the combustion gas and the operating condition parameter of the engine by fitting, based on a double-layer flat plate model corresponding to the engine, the first correspondence equation and the second correspondence equation according to a steady-state heat exchange conservation equation between the coolant in the engine and the combustion gas, wherein the function between the temperature of the combustion gas and the operating condition parameter of the engine is the local flow model corresponding to the type of the heat exchange component in the second target branch loop.

7. The method of claim 5, wherein the type of the heat exchange component in the second target branch loop is a non-engine type, and establishing the local flow model corresponding to the type of the heat exchange component in the second target branch loop comprises:

establishing a physical model corresponding to the thermal management system based on obtained first flow data of the thermal management system;
obtaining a target physical model corresponding to the thermal management system by modifying a model parameter of the physical model based on the first flow data;
calculating, based on the target physical model, second flow data of coolant at the heat exchange component in the second target branch loop in the thermal management system;
generating training samples according to the second flow data and a target characteristic parameter for controlling operation of the thermal management system corresponding to the second flow data; and
performing training on a preset model based on the training samples, and obtaining the local flow model for determining a local flow of the coolant at the heat exchange component in the second target branch loop.

8. An apparatus for modeling a thermal management system, comprising:

a first obtaining module, configured to obtain a plurality of temperature nodes in the thermal management system of a vehicle and a plurality of branch loops in the thermal management system;
a first determining module, configured to determine temperature nodes that are unable to be combined in the thermal management system based on a heat exchange component in each of the plurality of branch loops and/or warm water points of coolant in at least two of the plurality of branch loops; and
a second determining module, configured to obtain a target model corresponding to the thermal management system by combining the plurality of temperature nodes in the thermal management system according to a preset combination policy based on the temperature nodes that are unable to be combined in the thermal management system.

9. A device for modeling a thermal management system, comprising: a processor and a memory having computer program instructions stored thereon, wherein when the computer program instructions are executed by the processor, the method of any one of claims 1-17 is implemented.

10. A computer-readable storage medium having computer program instructions stored thereon, wherein when the computer program instructions are executed by a processor, the method of any one of claims 1-7 is implemented.

11. A vehicle comprising at least one of:

the apparatus for modeling a thermal management system in claim 8;
the device for modeling a thermal management system in claim 9; or
the computer readable storage medium in claim 10.

12. A computer program product comprising a computer program, wherein when the computer program is executed by a processor, the method of any one of claims 1-7 is implemented.

13. A computer program comprising computer program codes, wherein when the computer program codes are executed by a computer, the computer is caused to implement the method of any one of claims 1-7.

FIG. 1

FIG. 2

| | | |
|---|---|---|
| obtaining a plurality of temperature nodes in the thermal management system of a vehicle and a plurality of branch loops in the thermal management system | | Step 310 |
| determining temperature nodes that are unable to be combined in the thermal management system based on a heat exchange component in each of the plurality of branch loops and/or warm water points of coolant in at least two of the plurality of branch loops | | Step 320 |
| obtaining a target model corresponding to the thermal management system by combining the plurality of temperature nodes in the thermal management system according to a preset combination policy based on the temperature nodes that are unable be combined in the thermal management system | | Step 330 |

FIG. 3

engine *T1.1*

*T5*
*T3.1* water mixing point 2 *T4.9*

V3

*T4.7*  *T6.6*  *T6.3*

water mixing point 3

V6  V5  V4

*T1.2*
*T4.9*  *T4.1*
*T3*  *T3.2*

water mixing point 1
*T2.1*

V2  *T4.6*

*T6.5*
*T6.8*

*T6.9*

water mixing point 4

V1

FIG. 4

FIG. 5

FIG. 6

700

inside

710

720

external environment

FIG. 7

temperature ℃

delayed
temperature

currently
accumulated flow

$\overline{\int Q - Vi}$

3

2

1

$\overline{\int Q}$

flow delay
searching

accumulation
of flow value

FIG. 8

900

first obtaining module ~ 910

first determining module ~ 920

second determining module ~ 930

FIG. 9

1001

1002

1003

processor

memory

communication interface

1010

bus

FIG. 10

## INTERNATIONAL SEARCH REPORT

| International application No. |
| --- |
| **PCT/CN2023/101829** |

| **A.** | **CLASSIFICATION OF SUBJECT MATTER** |
| --- | --- |

G06F30/15(2020.01)i;  H01M10/613(2014.01)i

According to International Patent Classification (IPC) or to both national classification and IPC

| **B.** | **FIELDS SEARCHED** |
| --- | --- |

Minimum documentation searched (classification system followed by classification symbols)

IPC: G06F, H01M

Documentation searched other than minimum documentation to the extent that such documents are included in the fields searched

Electronic data base consulted during the international search (name of data base and, where practicable, search terms used)

VEN, CNTXT, ENTXT, IEEE, CNKI, 百度, BAIDU: 热管理, 温度, 冷却, 回路, 换热部件, 合并, 元件, 组合, 效率, thermal management?, temperature, burial+, loop?, bin+

| **C.** | **DOCUMENTS CONSIDERED TO BE RELEVANT** | |
| --- | --- | --- |

| Category* | Citation of document, with indication, where appropriate, of the relevant passages | Relevant to claim No. |
| --- | --- | --- |
| X | CN 103972607 A (FORD GLOBAL TECHNOLOGIES, L.L.C.) 06 August 2014 (2014-08-06) description, paragraphs [0029]-[0043], and figure 2 | 1, 8-13 |
| A | CN 110315961 A (NIO NEXTEV LTD.) 11 October 2019 (2019-10-11) entire document | 1-13 |
| A | CN 113847136 A (ZHEJIANG GEELY HOLDING GROUP CO., LTD. et al.) 28 December 2021 (2021-12-28) entire document | 1-13 |
| A | CN 114368279 A (VITESCO TECHNOLOGIES HOLDING CHINA CO., LTD.) 19 April 2022 (2022-04-19) entire document | 1-13 |
| A | US 2022029182 A1 (TSINGHUA UNIVERSITY) 27 January 2022 (2022-01-27) entire document | 1-13 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 October 2023** | **16 October 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/101829**

| Patent document cited in search report | | | Publication date (day/month/year) | Patent family member(s) | | | Publication date (day/month/year) |
|---|---|---|---|---|---|---|---|
| CN | 103972607 | A | 06 August 2014 | US | 2014216709 | A1 | 07 August 2014 |
| | | | | US | 2018354339 | A1 | 13 December 2018 |
| | | | | DE | 102014201747 | A1 | 07 August 2014 |
| CN | 110315961 | A | 11 October 2019 | US | 2019351732 | A1 | 21 November 2019 |
| CN | 113847136 | A | 28 December 2021 | | None | | |
| CN | 114368279 | A | 19 April 2022 | | None | | |
| US | 2022029182 | A1 | 27 January 2022 | US | 11309559 | B2 | 19 April 2022 |
| | | | | WO | 2021184490 | A1 | 23 September 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210715733